# EUROPÄISCHE PATENTSCHRIFT

(11) **EP 2 929 968 B1**
(45) Veröffentlichungstag und Bekanntmachung des Hinweises auf die Patenterteilung: **10.05.2017**
(21) Anmeldenummer: 15161963.2
(22) Anmeldetag: 31.03.2015
(51) Int. Cl.: B23D 31/00

(54) **BRUCHTRENNVORRICHTUNG**
FRACTURING MASCHINE
DISPOSITIF DE SÉPARATION PAR RUPTURE

(30) Priorität: 09.04.2014 DE 102014005285
(43) Veröffentlichungstag der Anmeldung: 14.10.2015
(73) Patentinhaber: Alfing Kessler Sondermaschinen GmbH, 73433 Aalen (DE)
(72) Erfinder: Smolarek, Andreas, 73434 Aalen (DE); Mollin, Marc, 73434 Aalen (DE); Retzler, Peter, 73574 Iggingen (DE)
(74) Vertreter: Patentanwälte Bregenzer und Reule Partnerschaftsgesellschaft mbB

(56) Entgegenhaltungen:
- EP-A1- 0 661 125
- EP-A1- 1 690 621
- DE-A1- 4 406 981
- DE-A1- 4 442 062
- US-A1- 2010 018 023

## Beschreibung

Die Erfindung betrifft eine Bruchtrennvorrichtung zum Bruchtrennen eines Motorbauteils, insbesondere eines Pleuels, mit einer Spreizelementanordnung mit mindestens einem Spreizelement und einem durch einen Spreizantrieb antreibbaren Betätigungskörper zum Betätigen des mindestens einen Spreizelements in eine Spreizstellung zum Abtrennen einer ersten Komponente des Motorbauteils, insbesondere eines Pleueldeckels, von einer zweiten Komponente des Motorbauteils, insbesondere einem Pleuelfuß, wobei sie mindestens eine Spreizelement-Halterung aufweist, an der das mindestens eine Spreizelement anhand einer Verbindungseinrichtung der Bruchtrennvorrichtung lösbar befestigbar ist. Eine derartige Bruchtrennvorrichtung ist z.B. in DE 44 42 062 A1 beschrieben.

Eine weitere derartige Bruchtrennvorrichtung ist z.B. in EP 0 661 125 A1 beschrieben. Eine Bruchtrennvorrichtung dieser Art weist in der Regel eine austauschbare Spreizelementanordnung auf, so dass sie an unterschiedliche zu bearbeitende Werkstück anpassbar ist, d.h. dass beispielsweise Spreizelemente mit einem größeren Außendurchmesser oder einen kleineren Außendurchmesser, Spreizelemente mit anderen Geometrien oder dergleichen an der Bruchtrennvorrichtung verwendbar sind. Die in EP 0 661 125 A1 nicht näher erläuterte Verbindungseinrichtung umfasst beispielsweise Schrauben, mit denen die Spreizelemente an die Spreizelement-Halterungen angeschraubt sind. Die Komponenten der Spreizelementanordnung, die auszutauschen sind, sind schwer.

Dadurch ist die Handhabung schwierig. Es ist vor allen Dingen schwierig, die Spreizelemente über Kopf mit der Spreizelementanordnung zu verschrauben. Man versucht daher, einen Werkstückwechsel möglichst zu vermeiden, damit man die Spreizelemente nicht austauschen muss.

Es ist daher die Aufgabe der vorliegenden Erfindung, eine leichter handhabbare Bruchtrennvorrichtung bereitzustellen.

Zur Lösung der Aufgabe bei einer Bruchtrennvorrichtung der eingangs genannten Art vorgesehen, dass die Verbindungseinrichtung eine Spanneinrichtung zum schraubenlosen Verspannen des mindestens einen Spreizelements mit der mindestens einen Spreizelement-Halterung aufweist, wobei die Spanneinrichtung mindestens einen Spannkörper zur Zusammenwirkung mit einem Widerlagerabschnitt eines mit dem Spreizelement verbundenen oder von dem Spreizelement gebildeten Widerlagerkörpers aufweist und der Spannkörper zwischen einer Spannstellung, in welcher er das mindestens eine Spreizelement mit der mindestens einen Spreizelement-Halterung verspannt, und einer Lösestellung verstellbar ist, in welcher das mindestens eine Spreizelement von der mindestens einen Spreizelement-Halterung entfernbar ist.

Es ist ein Grundgedanke der vorliegenden Erfindung, dass ohne eine Verschraubung auf einfachstem Wege eine Verspannung zwischen einerseits der mindestens einen Spreizelement Halterung und andererseits dem daran anzuordnenden mindestens einen Spreizelement zu schaffen. Selbstverständlich ist es vorteilhaft, wenn die erfindungsgemäße Bruchtrennvorrichtung mehrere Spreizelemente und mehrere zugeordnete Spreizelement-Halterungen hat, beispielsweise zwei Spreizelemente und zugeordnete Spreizelement-Halterungen. Die Spreizelementanordnung ist auf einfachstem Wege mit den zugeordneten Spreizelement-Halterungen verbindbar. Eine Betätigung von Schrauben, was über Kopf äußerst anstrengend ist, ist nicht notwendig. Die Spreizelementanordnung bildet beispielsweise einen sogenannten Spreizdorn aus.

Die Spreizelementanordnung weist zweckmäßigerweise mindestens zwei Spreizelemente auf, nämlich ein erstes und ein zweites Spreizelement. Jedem Spreizelement ist eine Spreizelement-Halterung zugeordnet. Weitere Spreizelemente und zugeordnete Spreizelement-Halterungen sind möglich, z.B. insgesamt drei oder vier Paarungen.

Es ist möglich, dass eine Spreizelement-Halterung ortsfest an einer Basis der Bruchtrenneinrichtung gehalten ist, während mindestens eine eines andere Spreizelement-Halterung beweglich an der Basis gelagert ist, so dass sie das Bewegungsspiel beim Bruchtrennen bzw. bei der Betätigung durch den Betätigungskörper mitmacht.

Eine vorteilhafte Ausgestaltung der Erfindung sieht vor, dass die Spanneinrichtung eine Keilflächenanordnung zum Verspannen des mindestens einen Spreizelements an der mindestens einen Spreizelement-Halterung aufweist. Die Keilflächenanordnung ist zwischen der Spanneinrichtung und den Widerlagerkörper des Spreizelements vorgesehen. Die Keilflächenanordnung kann beispielsweise einander zugeordnete Keilflächen einerseits am Widerlagerkörper und andererseits am Spannkörper aufweisen. Es ist aber auch möglich, das nur eine Keilfläche vorgesehen ist, die mit einer Widerlagerkontur an der anderen Komponente von Spannkörper oder Widerlagerkörper zusammenwirkt. Die Widerlagerkontur muss nicht keilförmig sein ist es allerdings vorteilhaft.

Bevorzugt ist ein Verschiebekeilgetriebe, d.h. dass ein als Keil ausgestalteter Spannkörper auf den Widerlagerkörper wirkt. Der Widerlagerkörper ist vorzugsweise ebenfalls keilförmig.

Es ist möglich, dass mehrere Spannkörper vorgesehen sind, beispielsweise mehrere Spannkeile. Zweckmäßigerweise ist jedoch nur ein einziger Spannkörper pro Spreizelement notwendig oder vorgesehen.

Es ist zwar möglich, den Spannkörper manuell anzutreiben, beispielsweise anhand eines Kurbeltriebs. Bevorzugt ist jedoch ein motorischer Spannantrieb, beispielsweise mit einem Elektromotor, ein hydraulischer Antrieb oder dergleichen, der zum Verstellen des Spannkörpers zwischen der Spannstellung und der Lösestellung vorgesehen ist. Ganz besonders bevorzugt ist ein Linearantrieb, beispielsweise ein Kugel-Spindelantrieb, ein Druckluft-Zylinder, ein Hydraulik-Zylinder oder dergleichen.

Ein vorteilhaftes Konzept sieht vor, dass an einander entgegengesetzten Seiten der mindestens einen Spreizelement-Halterung jeweils eine Antriebshalterung zur Befestigung des motorischen Spannantriebs bzw. des Antriebsmotors vorgesehen ist. Der Antriebsmotor kann also wahlweise an einer der beiden Seiten montiert werden. Dadurch ist zum einen ein Gleichteilprinzip realisiert, zum andern aber auch vorteilhaft möglich, den Spannantrieb dort zu montieren, wo er am wenigsten stört oder wo ausreichend Platz dazu ist.

Die mindestens eine Spreizelement-Halterung weist zweckmäßigerweise eine Führungsaufnahme für den Spannkörper auf.

Die Führungsaufnahme weist zweckmäßigerweise eine Entnahmeöffnung, zum Beispiel einen Schlitz, auf, durch die hindurch der Widerlagerkörper in die Führungsaufnahme einführbar ist oder aus der Führungsaufnahme entnehmbar ist. Die Entnahmeöffnung kann beispielsweise am jeweiligen Längsende der Führungsaufnahme vorgesehen sein. Es ist aber auch eine Entnahmeöffnung möglich, was in der Zeichnung noch deutlich wird, die entlang der Längserstreckungsrichtung der Führungsaufnahme vorgesehen ist.

Die Führungsaufnahme hat vorzugsweise eine Längsachse, die quer zur Spannachse bzw. Spannrichtung des Spreizelements bezüglich der Spreizelement-Halterung verläuft.

Die Führungsaufnahme ist zweckmäßigerweise einen zwei entgegengesetzten Seiten der Spreizelement-Halterung offen, so dass der Spannkörper wahlweise von einer der beiden Seiten her in die Führungsaufnahme einführbar ist. An den Öffnungen der Führungsaufnahme ist beispielsweise jeweils eine Antriebshalterung für den Spann-Antriebsmotor des Spannantriebs vorgesehen sein, so dass nicht nur der Spannkörper von einer jeweiligen Seite her in die Führungsaufnahme einführbar ist, sondern dort auch gleich der Antriebsmotor angeordnet sein kann. Der Spannkörper ist zweckmäßigerweise durch den Spann-Antriebsmotor in der Führungsaufnahme linear antreibbar.

Der Spann-Antriebsmotor kann ein Direktantrieb sein oder den Spannkörper über ein Getriebe antreiben.

Es ist weiterhin vorteilhaft, wenn die Führungsaufnahme zur Aufnahme des Widerlagerabschnitts des Widerlagerkörpers ausgestaltet ist. Beispielsweise kann der Widerlagerkörper, was später noch deutlich wird, als ein Spannanker ausgestaltet sein. Dieser Spannanker ist dann in der Führungsaufnahme linear geführt oder linear in die Führungsaufnahme einführbar. Zweckmäßigerweise ist der Spannanker durch die bereits erläuterte sich entlang der Längsrichtung der Führungsaufnahme erstreckende Entnahmeöffnung in die Führungsaufnahme einführbar oder aus dieser wieder heraus entnehmbar. Wenn der Spannanker in die Führungsaufnahme eingreift, ist mindestens ein Widerlagerabschnitt des Spannankers in der Führungsaufnahme angeordnet.

Bei der Führungsaufnahme handelt es sich beispielsweise um einen rohrförmigen Führungskanal. Die Führungsaufnahme kann auch eine T-förmige oder L-förmige Nut oder eine Schwalbenschwanzkontur umfassen.

Der Spannkörper weist zweckmäßigerweise gabelartig angeordnete oder gabelartig ausgestaltete Spannarme auf, zwischen denen der Widerlagerkörper des mindestens einen Spreizelements in der Spannstellung angeordnet ist. In der Spannstellung ist jeder Spannarm in Eingriff mit einem Widerlagerabschnitt des Widerlagerkörpers. Dadurch ist eine symmetrische Abstützung des Widerlagerkörpers von einander entgegengesetzten Seiten her gegeben, d.h. die gesamte Anordnung lässt sich gleichmäßig und ohne ein Verkanten verspannen.

Die Spannarme sind beispielsweise als Keilkörper ausgestaltet oder weisen Keilkörper auf. Vorteilhaft ist es jedenfalls, wenn zwischen einem jeweiligen Spannarm und dem zugeordneten Widerlagerabschnitt mindestens eine Keilfläche der Keilflächenanordnung vorgesehen ist. Selbstverständlich ist es vorteilhaft, wenn beide, nämlich Spannarm und zugeordneter Widerlagerabschnitt, einander zugeordnete Keilflächen aufweisen.

Die Spannarme untergreifen beispielsweise von einem Grundschenkel des Widerlagerkörpers seitlich abstehende Seitenschenkel.

Es ist aber auch möglich, dass an dem Widerlagerkörper beispielsweise zumindest an einem Längsendbereich offene Aufnahmekanäle zum Eingriff eines jeweiligen Spannarms vorgesehen sind. Die Spannarme können dann beispielsweise so in einen jeweiligen Aufnahmekanal eingreifen, wie eine Gabel eines Gabelstaplers in eine Palette eingreift.

In der Zeichnung ist eine Ausführungsform dargestellt, bei der die Spannarme in seitliche Vertiefungen des Widerlagerkörpers eingreifen.

Ein vorteilhaftes Konzept sieht vor, dass an der mindestens einen Spreizelement-Halterung eine Befestigungseinrichtung zur Befestigung einer Abstützeinrichtung für das Motorbauteil angeordnet ist, so dass ein das Motorbauteil abstützendes Element, insbesondere ein Stützkopf, und dass an der Spreizelement-Halterung angeordnete Spreizelement sich beim Bruchtrennen simultan bewegen. Mithin ist also das Motorbauteil durch die Abstützeinrichtung abgestützt, wenn das Spreizelement die Bruchtrennung bewirkt. Die Befestigungseinrichtung sieht zweckmäßigerweise vor, dass die Abstützeinrichtung lösbar an der Spreizelement-Halterung befestigbar ist. Die Abstützeinrichtung umfasst beispielsweise einen Stellantrieb, mit dem der Stützkopf oder das sonstige abstützende Element zwischen einer Stützstellung und einer Freigabestellung verstellbar ist. Das Befestigungskonzept des Stellantriebs oder der Abstützeinrichtung ist zweckmäßigerweise dasselbe oder ein ähnliches wie bei der erfindungsgemäßen Bruchtrennvorrichtung. Zwischen der mindestens einen Spreizelement-Halterung und dem mindestens einen Spreizelement oder zwischen dem mindestens einen Spreizelement und dem Widerlagerkörper ist zweckmäßigerweise mindestens eine Linearführung zur lösbaren Befestigung und Führung der jeweiligen Komponenten aneinander entlang einer Längsachse vorgesehen. Mithin können also das Spreizelement und der Widerlagerkörper und/oder das Spreizelement und die Spreizelement-Halterung anhand einer Linearführung lösbar miteinander befestigt werden. Es ist beispielsweise möglich, dass der als Spannanker ausgestaltete Widerlagerkörper anhand einer derartigen Linearführung mit dem Spannelement verbunden wird oder ist. Auch der Widerlagerkörper kann anhand der Linearführung mit der Spreizelement-Halterung verbunden werden oder sein.

Jedenfalls ist es vorteilhaft, wenn die Komponenten (Widerlagerkörper, Spreizelement oder Spreizelement-Halterung) durch eine Bewegung entlang der Längsachse in Eingriff oder außer Eingriff miteinander bringbar sind.

Die Längsachse der mindestens einen Linearführung verläuft zweckmäßigerweise quer zu einer Spannrichtung oder Spannachse der Spanneinrichtung. Beispielsweise verlaufen die Achsen rechtwinkelig oder etwa rechtwinkelig zueinander.

Die mindestens eine Linearführung (es können ja mehrere Linearführungen vorgesehen sein) ist zweckmäßigerweise an zwei Endbereichen offen, so dass die jeweiligen Komponenten (Widerlagerkörper und Spreizelement oder Widerlagerkörper und Spreizelement-Halterung) von entgegengesetzten Seiten her in die Linearführung einführbar sind.

Die mindestens eine Linearführung weist zweckmäßigerweise eine Aufnahmenut und einen Führungsvorsprung zum Eingriff in die Aufnahmenut auf. Der Führungsvorsprung und die Aufnahmenuten sind beispielsweise schwalbenschwanzartig, T-förmig oder L-förmig.

Der Widerlagerkörper kann einstückig mit dem mindestens einen Spreizelement sein. Beispielsweise kann der Widerlagerkörper als eine Art Spannvorsprung vor das Spreizelement vorstehen. Bevorzugt ist es jedoch, wenn der Widerlagerkörper lösbar mit dem mindestens einen Spreizelement verbindbar ist.

Eine vorteilhafte Ausführung der Erfindung sieht vor, dass der Widerlagerkörper einen Spannanker bildet oder als Spannanker ausgestaltet ist.

Der Widerlagerkörper bildet zweckmäßigerweise eine Führungskomponente der Linearführung, mit der das Spreizelement an der mindestens einen Spreizelement-Halterung durch eine Linearbewegung entlang der Längsachse befestigbar ist oder durch eine derartige lineare Bewegung entlang der Längsachse von der mindestens einen Spreizelement-Halterung lösbar ist.

Zweckmäßigerweise ist eine Sensoranordnung zur sensorischen Erfassung einer Anlage des mindestens einen Spreizelements an der mindestens einen Spreizelement-Halterung vorgesehen. Beispielsweise ist die Sensoranordnung zu einer Staudruckmessung ausgestaltet. Aber auch ein sonstiger Kontaktsensor, beispielsweise ein induktiver Sensor, ein Tastsensor oder dergleichen, können die Anlage von Spreizelement und Spreizelement-Halterung aneinander ohne weiteres messen.

Zweckmäßigerweise weist die Bruchtrennvorrichtung oder eine diese aufweisende Werkzeugmaschine eine Schmiereinrichtung zum Schmieren der Keilflächenanordnung oder einer Führungsflächenanordnung oder beiden auf. Die Führungsflächen befinden sich zwischen dem oder den Spreizelementen und dem Betätigungskörper.

Die Spreizelementanordnung umfasst, wie erwähnt, vorzugsweise mindestens ein zweites Spreizelement, wobei der Betätigungskörper zumindest während des Bruchtrennens zwischen dem mindestens einen ersten Spreizelement und dem mindestens einen zweiten Spreizelement oder weiteren Spreizelementen angeordnet ist. Es ist natürlich auch möglich, dass der Betätigungskörper nicht nur während des Bruchtrennens, sondern auch davor oder danach zwischen den jeweiligen Spreizelementen angeordnet ist. Der Vorteil bei mehreren Spreizelementen ist, dass die Spreizelemente in Anlage mit beispielsweise einer Widerlagerfläche außerhalb des zu bearbeitenden Motorbauteils oder auch einer Widerlagerfläche des Motorbauteils gelangen können und sich der Betätigungskörper sozusagen indirekt über die Spreizelemente an der Widerlagerfläche außerhalb des zu bearbeitenden Motorbauteils bzw. der Widerlagerfläche des Motorbauteils abstützen kann. Der Betätigungskörper kann sich aber auch beispielsweise direkt an eine Widerlagerfläche der Bruchtrennvorrichtung oder des Motorbauteils abstützen. In diesem Fall genügt beispielsweise ein einziges Spreizelement.

Ein vorteilhaft vorgesehenes Umlenkgetriebe, z.B. die Keilflächen der Keilflächenanordnung, zwischen dem mindestens einen Spreizelement und dem Betätigungskörper bewirkt eine Bewegungsumlenkung von einer Stellachse des Betätigungselements zu einer Spreizrichtung oder Spreizachse, in welcher die Bruchtrenneinrichtung die erste Komponente des Motorbauteils, zum Beispiel den Pleueldeckel, von der zweiten Komponente des Motorbauteils, zum Beispiel einem Pleuelfuß, abtrennt.

Die Keilflächenanordnung, die zum Beispiel ein Keilgetriebe bildet oder umfasst, ist besonders robust. Eine Keilflächenanordnung ist daher bevorzugt.

Das Umlenkgetriebe umfasst z.B. eine Keilflächenanordnung. Das Umlenkgetriebe kann aber auch ein Kurbelgetriebe, ein Kniehebelgetriebe, ein Exzentergetriebe oder dergleichen aufweisen.

Zu den Keilflächen der Keilflächenanordnung ist festzuhalten, dass es genügt, wenn beispielsweise der Betätigungskörper eine Keilfläche aufweist, während das zugeordnete Spreizelement keine Keilfläche aufweist oder auch umgekehrt, dass das Spreizelement eine Keilfläche hat, während der Betätigungskörper ohne eine Keilfläche an dieser Keilfläche des Spreizelements entlang gleitet. Besonders bevorzugt ist jedoch, wenn Paarungen von Keilflächen vorhanden sind, d.h. dass der Betätigungskörper mit einer Keilfläche an einer Keilfläche des Spreizelements entlang beweglich gelagert ist.

Die Spreizelementanordnung ist zweckmäßigerweise zur Anordnung in einer Lageröffnung des Motorbauteils, zum Beispiel einem Lager-Auge eines Pleuels, ausgestaltet. Bei der Lageröffnung kann es sich, wie hier deutlich wird, beispielsweise auch um eine Lageröffnung eines Motorblocks oder dergleichen handeln.

Eine Spreizelement-Führungsanordnung und/oder eine Spreizelement-Positioniereinrichtung sorgen für die Positionierung der Spreizelemente in der jeweiligen Lageröffnung.

Nachfolgend werden Ausführungsbeispiele der Erfindung anhand der Zeichnung erläutert. Es zeigen:

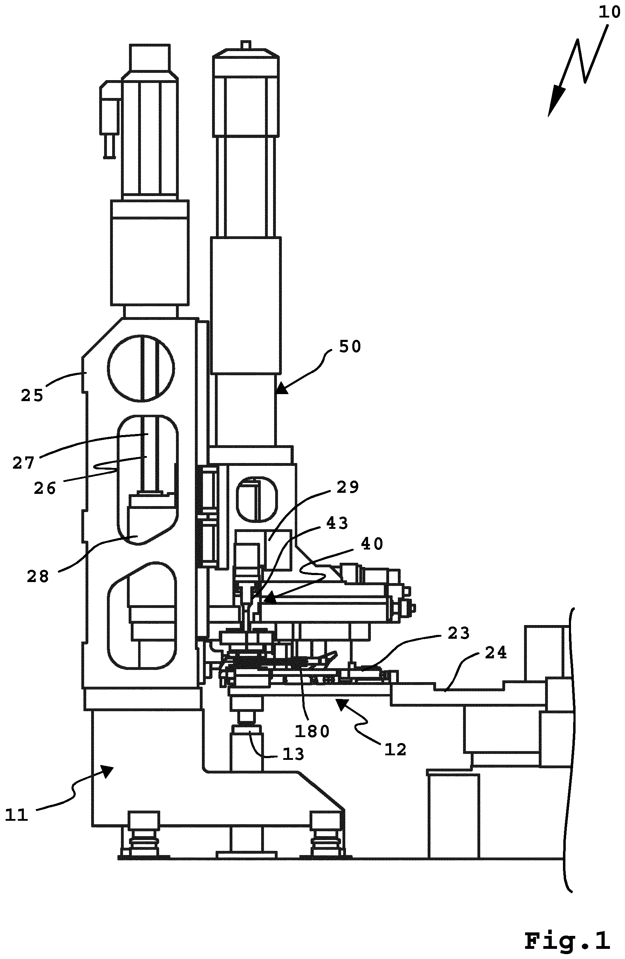

- Figur 1: eine Seitenansicht einer Werkzeugmaschine, die eine erfindungsgemäße Bruchtrennvorrichtung aufweist,

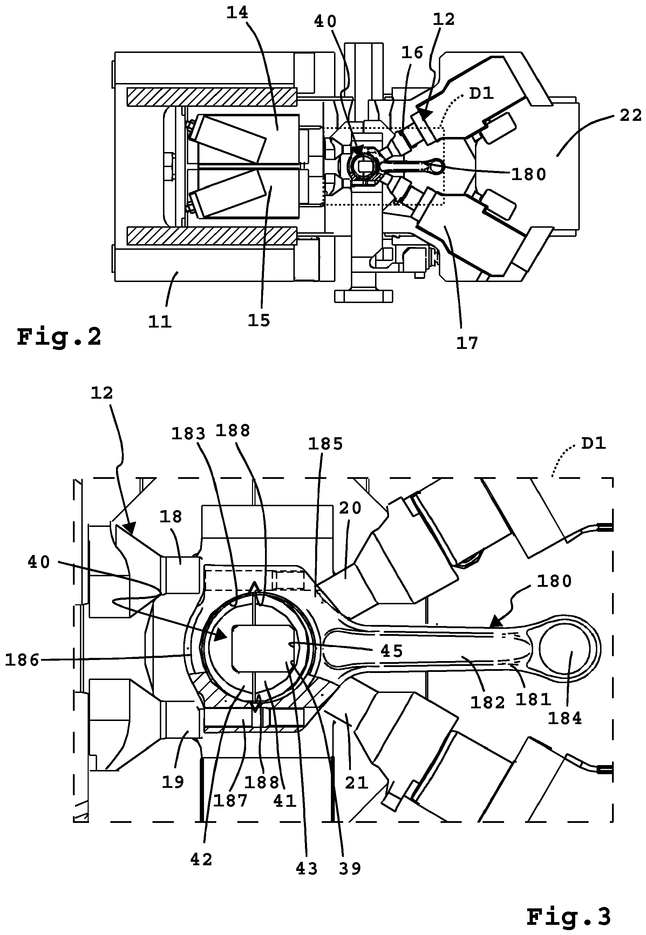

- Figur 2: eine frontale Draufsicht auf ein Unterteil der Werkzeugmaschine gemäß Figur 1 sowie eine Bruchtrennvorrichtung und eine Werkstück-Halteeinrichtung, von der in
- Figur 3: ein Detail D1 aus Figur 2 dargestellt ist,
- Figur 4: eine perspektivische Schrägansicht auf einen Teil der Bruchtrennvorrichtung gemäß Figuren 1-3 mit einer Spanneinrichtung beim Spannen eines Spreizelements,
- Figur 5: die Spanneinrichtung aus Figur 4 in vergrößerter Darstellung,

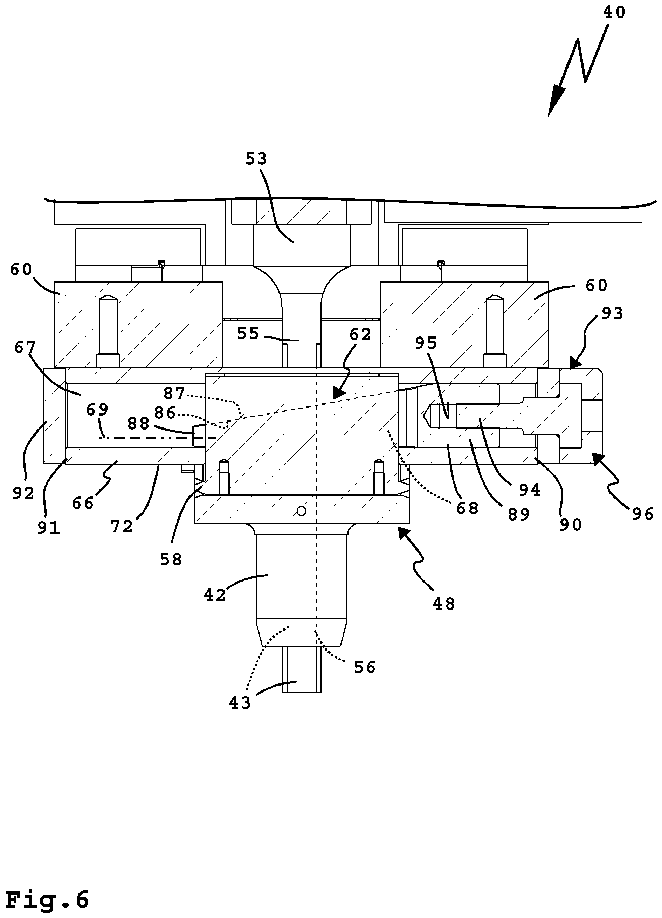

- Figur 6: eine Teil-Querschnittsdarstellung der Anordnung gemäß Figur 4, etwa entlang einer Schnittlinie A-A in Figur 4,

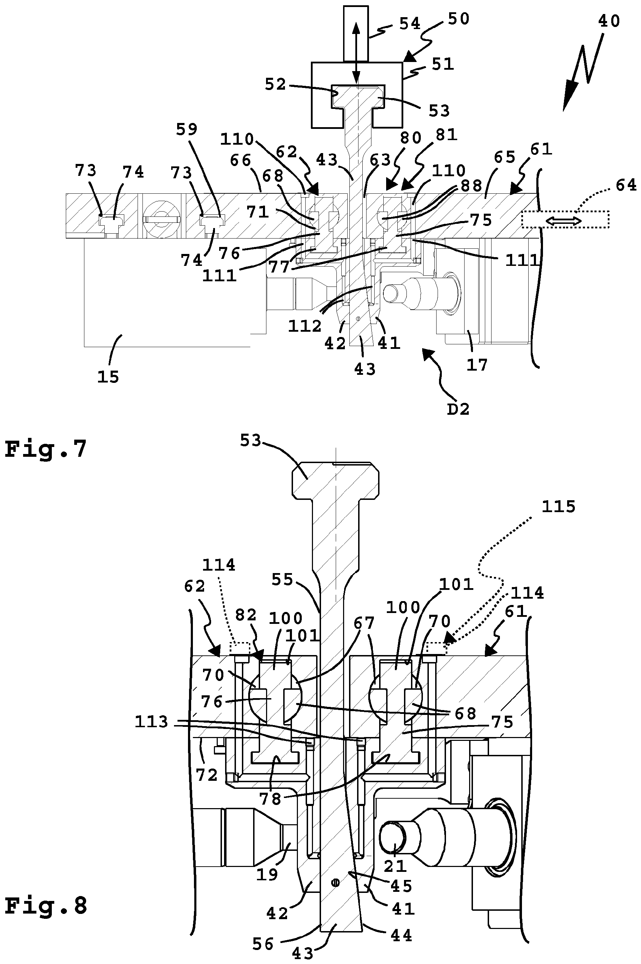

- Figur 7: eine Teil-Querschnittsdarstellung der Anordnung gemäß Figur 4, etwa entlang einer Schnittlinie B-B in Figur 4
- Figur 8: eine Detailvergrößerung D2 Figur 7.

Eine in der Zeichnung schematisch dargestellte Werkzeugmaschine 10, die auch ein Bearbeitungszentrum oder Bestandteil eines Bearbeitungszentrums sein kann, weist eine Bruchtrennvorrichtung 40 zum Bruchtrennen von Motorbauteilen 180 auf. Man könnte die Werkzeugmaschine 10 auch als Crack-Maschine bezeichnen.

Die Werkzeugmaschine 10 ist dazu vorgesehen, beispielsweise Pleuel 181 als Motorbauteile 180 zu bearbeiten, wobei ein alternatives Anwendungsfeld der Erfindung auch beispielsweise das Cracken von Zylinderdeckeln von einem Motorblock ist. Auch andere Werkstücke können im Prinzip nach dieser Art bruchgetrennt werden.

Die Pleuel 181 umfassen einen Pleuelschaft 182, der am einen Endbereich ein sogenanntes kleines Auge 184, also eine Lagerbohrung oder Lagerausnehmung, sowie ein großes Auge 183 aufweist, ebenfalls eine Lagerbohrung oder Lagerausnehmung. Die beiden Lagerausnehmung oder Augen 183 und 184 sind beispielsweise zur drehbaren Verbindung mit einer Kurbelwelle und einem Kolben vorgesehen (nicht dargestellt).

Im Bereich des großen Auges 183 wird mit der Werkzeugmaschine 10 die nachfolgende Bearbeitung durchgeführt:
Von einem Pleuelfuß 185 wird mittels der Bruchtrennvorrichtung 40 ein Pleueldeckel 186 abgetrennt, so dass sich an den Seitenschenkeln des Pleuelfußes 185 und den Seitenschenkeln des Pleueldeckels 186, die jeweils das große Auge 183 seitlich begrenzen, Bruchtrennflächen ausbilden. Diese Bruchtrennflächen passen formschlüssig zueinander, da die Oberflächentopographie bei beiden Bruchtrennflächen im Idealfall identisch ist.

Die Werkzeugmaschine 10 und/oder das Bearbeitungszentrum können ein Kerbwerkzeug, zum Beispiel zum Laser-Kerben, aufweisen, was in der Zeichnung jedoch nicht dargestellt ist. Jedenfalls sind vorteilhaft im Bereich der späteren Bruchtrennflächen oder -linien jeweils das Bruchtrennen erleichternde Kerben 188 vorgesehen. Die Kerben 188 könnten aber auch schon von vorneherein an dem Pleuel 181 vorgesehen sein, beispielsweise wenn dieses als ein Gussteil oder Sinterteil hergestellt ist.

Die Werkzeugmaschine 10 umfasst eine Maschinenbasis 11, zum Beispiel ein Maschinenbett, an der eine Werkstück-Halteeinrichtung 12 angeordnet ist. Mit der Werkstück-Halteeinrichtung können Werkstücke, nämlich das Motorbauteil 180 oder das Pleuel 181, gehalten werden, während die weitere Bearbeitung durch die Bruchtrennvorrichtung 40 stattfindet. Die Werkstück-Halteeinrichtung 12 kann einen Bestandteil der Bruchtrennvorrichtung 40 bilden.

Von unten her wird das Pleuel 181 oder Motorbauteil 180 von einer Werkstück-Stützeinrichtung 13 abgestützt. Die Stützeinrichtung 13 kann direkt an dem Motorbauteil 180 angreifen, dieses also direkt abstützen, oder auch beispielsweise eine Kassette 23, in der das Motorbauteil 180 oder Pleuel 181 angeordnet ist.

Während der Bearbeitung durch die Bruchtrennvorrichtung 40 ist das Pleuel 181 durch seitlich wirkende Abstützeinrichtungen 14, 15, 16, 17 abgestützt, deren Stützköpfe 18, 19 beispielsweise von der Seite des Pleueldeckels 186 her stützend wirken, während die Stützkörper 20 und 21 der Abstützeinrichtungen 16, 17 von der anderen Seite, nämlich vom Pleuelfuß 185 her abstützen. Somit ist jedenfalls das Pleuel 181 während der Bruchtrenn-Bearbeitung sicher gehalten.

Die Werkzeugmaschine 10 umfasst weiterhin vorteilhaft einen Rundtisch 22 oder zweckmäßigerweise eine sonstige Werkstück-Fördereinrichtung, mit der Werkstücke, nämlich Motorbauteile 180 oder Pleuel 181, der Bruchtrennvorrichtung 40 zugeführt werden können bzw. auch von der Bruchtrennvorrichtung 40 wieder weg geführt werden können. Auf dem Rundtisch 22 sind beispielsweise Kassetten 23 angeordnet.

Vor die Maschinenbasis 11 steht ein Ständer 25 nach oben vor, der beispielsweise in der Art eines Turms, eines Tragrahmens oder dergleichen ausgestaltet ist. Der Ständer 25 trägt eine Führungsanordnung 26 oder bildet eine solche. Die Führungsanordnung 26 umfasst eine Linearführung 27, an der die Bruchtrennvorrichtung 40 linear geführt ist. Mithilfe eines Positionierantriebs 28, beispielsweise eines elektrischen Antriebs oder pneumatischen Antriebs oder fluidischen Antriebs, kann die Bruchtrennvorrichtung 40 zwischen einer unteren Arbeitsposition, in der sie zur Bearbeitung des Motorbauteils 180 oder Pleuels 181 bereitsteht und einer oberen Stellung, in der die Bruchtrennvorrichtung 40 von dem Motorbauteil 180 oder Pleuel 181 entfernt ist und ein Werkstückwechsel möglich ist, indem beispielsweise der Rundtisch 22 weiter schaltet und ein unbearbeitetes Werkstück zur weiteren Bearbeitung durch die Bruchtrennvorrichtung 40 zuführt, verstellt werden. Die Bruchtrennvorrichtung 40 ist z.B. an einem an der Linearführungen 27 oder der Führungsanordnung 26 linear geführten Schlitten 29 angeordnet.

Die Bruchtrennvorrichtung 40 umfasst ein erstes Spreizelement 41 und ein zweites Spreizelement 42 einer Spreizelementanordnung 48.

Die Spreizelemente 41, 42 sind beispielsweise durch eine Spreizelement-Positioniereinrichtung in eine Arbeitsposition bringbar, z.B. in das große Auge 183 einführbar.

Eine bevorzugte einfache, jedoch aus der Zeichnung nicht ohne weiteres ersichtliche, Ausführungsform kann vorsehen, dass beispielsweise der Positionierantrieb 28, wenn er die Bruchtrennvorrichtung 40 als Ganzes in die Arbeitsposition (untere Position) verstellt, die Spreizelemente 41, 42 in das auf der Stützeinrichtung 13 bereitstehende Motorbauteil 180 einführt, nämlich in das große Auge 183 des Pleuels 181.

Die Spreizelemente 41, 42 können durch einen Betätigungskörper 43 nach radial außen verdrängt werden, wobei sie den Pleueldeckel 186 vom Pleuelfuß 185 des Pleuels 181 abtrennen. Dann entsteht im Bereich der Kerben 188 eine Bruchtrennfläche, wie oben bereits erläutert.

Die beiden Spreizelemente 41, 42 haben eine Außenumfangskontur, die mit einer Innenumfangskontur der Lageröffnung, des Auges 183, korrespondiert. Mithin können also die Spreizelemente 41, 42 formschlüssig passend am Innenumfang des Auges 183 anliegen. Die Spreizelemente 41, 42 bilden beispielsweise Spreizbacken.

Die Spreizelemente 41, 42 begrenzen eine Führungsaufnahme 39 zur Aufnahme und Führung des Betätigungskörpers 43.

Der Betätigungskörper 43 umfasst beispielsweise einen sogenannten Spreizkeil.

An einem freien Endbereich des Betätigungskörpers 43, einem Betätigungsabschnitt 56, befindet sich eine Keilfläche 44, die mit einer Keilfläche 45 am Spreizelement 42 zusammenwirkt und an dieser anliegt. Die Keilflächen 44, 45 bilden eine Keilflächenanordnung 49.

Die Führungsaufnahme 39 umfasst also an einer Seite die Keilfläche 45. Die andere Seiten der Innenumfangskontur der Führungsaufnahme 39 bilden Führungsflächen 47, an denen der Betätigungskörper 43 mit seinem restlichen, sich neben der Keilfläche 44 befindlichen Außenumfang entlang gleitet und geführt ist. Diese anderen Flächen des Betätigungskörpers 43 sind Führungsflächen 46.

Der Betätigungskörper 43 ist durch einen Spreizantrieb 50 antreibbar. Der Spreizantrieb 50 umfasst einen Abtriebskopf 51, an dem der Betätigungskörper 43 angeordnet ist. Beispielsweise ist ein Haltekopf 53, der beispielsweise einen T-förmigen Haltevorsprung aufweist, des Betätigungskörpers 43 in einer Halteaufnahme 52 des Abtriebskopfes 51, die zweckmäßigerweise komplementär T-förmig ist, angeordnet. Der Abtriebskopf 51 wird beispielsweise durch einen Spreizantriebsmotor 54, zum Beispiel einen hydraulischen Antrieb, einen elektrischen Antrieb, einen Impulsantrieb oder dergleichen, im Sinne eines Aufweitens der Spreizelemente 41 und 42 angetrieben.

Ein Stangenabschnitt 55 des Betätigungskörpers 43 durchdringt eine Haltebasis 60, an der die Abstützeinrichtungen 14-17 sowie die Spreizelementanordnung 48 gehalten ist. Zwischen Spreizelement-Halterungen 61, 62 für die Spreizelemente 41, 42 ist eine Durchtrittsöffnung 63 vorgesehen, durch die hindurch der Stangenabschnitt 55 vorsteht. Der Stangenabschnitt 55 erstreckt sich zwischen dem die Keilfläche 44 aufweisenden Betätigungsabschnitt 56 des Betätigungskörpers 43 und dem Haltekopf 53.

Die Spreizelement-Halterungen 61, 62 sind an Haltekörpern 65, 66 vorgesehen. Der Haltekörper 66 ist bezüglich der Maschinenbasis 11 beispielsweise ortsfest, während der Haltekörper 65 anhand einer Linearführung 64 bezüglich der Maschinenbasis 11 insbesondere linear verschieblich oder jedenfalls beweglich gelagert ist, so dass er die Spreizbewegung des Spreizelements 41 vom Spreizelement 42 weg, die durch den Betätigungskörper 43 verursacht wird, mitmachen kann. Der Haltekörper 66 könnte auch bezüglich der Maschinenbasis 11 insbesondere linear beweglich gelagert sein.

Die Haltekörper 65, 66 sind beispielsweise plattenartig oder klotzartig.

Die Haltekörper 65, 66 weisen Führungsaufnahmen 67 auf, in denen Spannkörper 68 linear entlang einer Längsachse 69 der Führungsaufnahmen 67 beweglich aufgenommen und geführt sind. Die Führungsaufnahmen 67 bilden Bestandteile von Linearführungen 70.

Beispielsweise sind die Führungsaufnahmen 67 im Querschnitt rund, z.B. etwa kreisrund, könnten im Querschnitt aber auch polygonal sein. Von den Führungsaufnahmen 67 weg erstrecken sich Entnahmeöffnungen 71, beispielsweise Schlitze, zu einer beispielsweise eine Unterseite bildenden Anlagefläche 72 eines jeweiligen Haltekörpers 65, 66 hin.

An diesen Anlageflächen 72 sind die Spreizelemente 41, 42 zu montieren. Dies wird durch die Linearführungen 70 und Spannkörper 68, die Bestandteile von Spanneinrichtungen 81, 82 bilden, erheblich erleichtert. Die Spanneinrichtungen 81, 82 bilden Verbindungseinrichtungen 80 zur schraubenlosen Verbindung der Spreizelemente 41, 42 mit den Spreizelement-Halterungen 61, 62.

Zunächst sei aber noch erläutert, dass an den Anlageflächen 72 auch die Abstützeinrichtungen 14-17 anhand von Befestigungseinrichtungen 59 montiert sind, die beispielsweise Schraubverbindungen und/oder im Querschnitt T-förmige Aufnahmenuten 73 umfassen. In den Aufnahmenuten 73 sind komplementäre, formschlüssig passende Haltevorsprünge 74 der Abstützeinrichtungen 14-17, beispielsweise deren Stellantriebe, aufgenommen. Eine vorteilhaft vorgesehene zusätzliche Verschraubung, bei der beispielsweise die Haltevorsprünge 74 durch Spannschrauben in den Aufnahmenuten 73 verspannt werden, ist in der Zeichnung nicht dargestellt. Die Aufnahmenuten 73 und die Haltevorsprünge 74 bilden Bestandteile von Linearführungen, d.h. dass die Abstützeinrichtungen 14-17 von der Seite her an den Haltekörpern 65, 66 bequem befestigbar sind. Diese Linearführungen haben beispielsweise zu der Längsachse 69 parallele Führungsachsen.

Die Spreizelemente 41, 42 sind an Haltekörpern 57, 58 angeordnet. Die Haltekörper 57, 58 sind beispielsweise klotzartig oder blockartig. Beispielsweise sind die Spreizelemente 41, 42 mit den Haltekörpern 57, 58 verschraubt. Es ist aber auch denkbar, dass die Spreizelemente 41, 42 und die Haltekörper 57, 58 einstückig sind.

Mit den Haltekörpern 57, 58 sind Widerlagerkörper 75, 76 lösbar verbindbar, bei Gebrauch der Bruchtrennvorrichtung 40 jedenfalls miteinander verbunden. Die Widerlagerkörper 75, 76 greifen mit Haltevorsprüngen 77 in Halteaufnahmen 78 der Haltekörper 57, 58 ein. Beispielsweise sind die Haltevorsprünge 77 im Querschnitt T-förmig, die Halteaufnahmen 78 entsprechend komplementär als T-förmige Nuten ausgestaltet, so dass die Haltevorsprünge 77 formschlüssig in die Halteaufnahmen 78 eingreifen können. Die Halteaufnahmen 78 haben eine Längsgestalt und erstrecken sich parallel zur Längsachse 69 der Linearführungen 70, so dass sie Bestandteile von Linearführungen 79 bilden.

An Grundkörpern 83 der Widerlagerkörper 75, 76 sind seitliche Aufnahmen 84 vorgesehen, beispielsweise Vertiefungen, deren zu den Haltevorsprüngen 77 zugewandte Innenflanken als Widerlagerabschnitte 85 dienen. Die Widerlagerabschnitt 85 sind als Keilflächen 86 ausgestaltet, die schräg zur Längsachse 69 verlaufen. Ebenso schräg zur Längsachse 69 verlaufen Keilflächen 87 von Spannarmen 88 der Spannkörper 68.

Die Spannarme 88 stehen vor eine Basis 89 des Spannkörpers 68 gabelartig vor. Zwischen den Spannarmen 88 sind die Widerlagerkörper 75 oder 76 aufgenommen. Die Spannarme 88 greifen also gabelartig an den Grundkörpern 83 vorbei.

Die Keilflächen 86, 87 bilden Bestandteile eines Keilgetriebes und einer Keilflächenanordnung. Die Keilflächen 86, 87 bewirken jedenfalls eine Bewegungsumkehr dahingehend, dass eine Längsbewegung des Spannkörpers 68 entlang der Längsachse 69 zu einer Querbewegung quer zu der Längsachse 69 der Widerlagerkörper 75, 76 und somit der Haltekörper 57, 58 mit den Spreizelementen 41, 42 umgelenkt wird. Durch eine Längsbewegung der Spannkörper 68 entlang der Längsachse 69 erfahren die Widerlagerkörper 75, 76 und somit auch die Haltekörper 57, 58 der Spreizelemente 41, 42 eine Bewegung zu der Anlagefläche 72 hin oder davon weg entlang einer Spannrichtung 97.

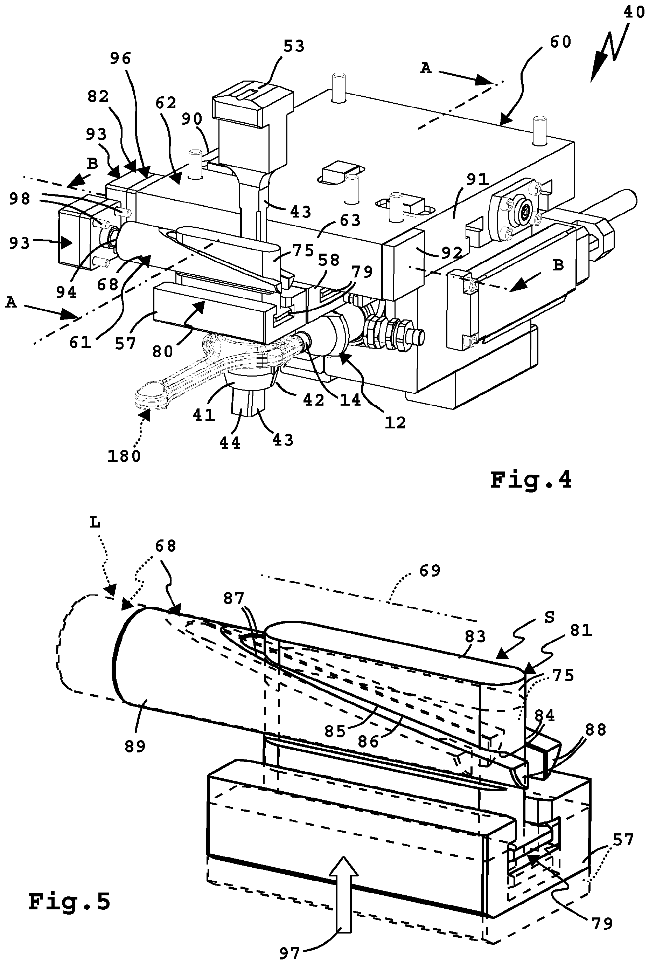

In Figur 5 ist die Verstellbewegung des Spannkörpers 68 zwischen einer Spannstellung S, in welcher die Haltekörper 57, 58 an die Anlagefläche 72 gespannt sind, und einer noch nicht ganz erreichten Lösestellung L angedeutet, wobei die Lösestellung L in gestrichelten Linien angedeutet ist, die Spannstellung S in durchgezogenen Linien des Spannkörpers 68 und des Widerlagerkörpers 75. Wenn die Spannarme 88 außer Eingriff mit den Aufnahmen 84 sind, können die Grundkörper 83 aus den Entnahmeöffnungen 71 herausgezogen werden, in die sie in der Spannstellung S jedenfalls eingreifen.

Die Führungsaufnahmen 67 sind an beiden Seiten 90, 91 der Haltekörper 65, 66 jeweils offen. Es wäre denkbar, die Widerlagerkörper 75, 76 von einer der beiden Seiten 90 oder 91 her in die Führungsaufnahmen 67 einzuführen. Vorliegend erfolgt jedoch die Montage von unten her, was besonders einfach ist, nämlich durch die Entnahmeöffnungen 71.

An der Seite 91 ist vorliegend ein Deckel 92 montiert. Die Öffnungen der Führungsaufnahmen 67 an der anderen Seite 91 hingegen dienen zur Montage von Spann-Antriebsmotoren 93 zur Betätigung der Spannkörper 68. Ein Antriebsvorsprung 94, beispielsweise in der Art einer Schraube, greift in eine Antriebsausnehmung 95 am Spannkörper 68 ein. Eine Drehbewegung des Antriebsvorsprungs 94 führt zu einer Linearbewegung des Spannkörpers 68 entlang der Längsachse 69. Die Spann-Antriebsmotoren 93 bilden Bestandteile eines Spannantriebs 96. Vorzugsweise sind an beiden Seiten 90 und 91 Bohrungen und somit Bestandteile einer Antriebshalterung für Schrauben 98, mit denen die Spann-Antriebsmotoren 93 am Haltekörper 65 oder 66 befestigbar sind, vorgesehen.

Anstelle des Deckels 92 könnte ein jeweiliger Spann-Antriebsmotor 93 auch an der Seite 91 montiert werden.

Die Führungsaufnahmen 67 weisen entgegengesetzt zu den Entnahmeöffnungen 71 Aufnahmevertiefungen 101 auf, in die obere Abschnitte 100 oder Köpfe der Widerlagerkörper 75, 76 formschlüssig eingreifen. Beispielsweise sind die Aufnahmevertiefungen 101 im Querschnitt U-förmig. Die jeweilige Basis 89 eines Widerlagerkörpers 75, 76 ist formschlüssig in der Aufnahmevertiefung 101 und der Entnahmeöffnung 71 aufgenommen. Die Aufnahmevertiefungen 101 und die Entnahmeöffnungen 71 bilden die Widerlagerkörper 75, 76 entlang der Längsachse 69 führende bzw. quer zur Längsachse 69 abstützende Führungskonturen. Jedenfalls sind die Widerlagerkörper 75, 76 quer zur Längsachse 69 durch die Entnahmeöffnungen 71 und die Aufnahmevertiefungen 101 abgestützt.

In den Haltekörpern 65, 66 sind jeweils Kanäle 110 vorgesehen, die mit Kanälen 111 an den Haltekörpern 57, 58 kommunizieren. Die Kanäle 111 wiederum kommunizieren mit Kanälen 112 an den Spreizelementen 41, 42. Die Kanäle 112 münden ihrerseits im Bereich der Führungsaufnahme 39 aus. Beispielsweise kann durch die Kanäle 110-112 ein Schmiermittel zugeführt werden.

Von den Kanälen 111 zweigen Kanalabschnitte 113 ab, die an der Anlagefläche 72 münden. Am Eingang der Kanäle 110 können beispielsweise Drucksensoren 114 einer Sensoranordnung 115 angeordnet sein, mit denen ein Staudruck in den Kanälen 111 messbar ist. Wenn nämlich bei an den Spreizelement-Halterungen 61, 62 montierten Spreizelementen 41, 42 Druck über die Kanäle 110-113 verloren geht, beispielsweise Druck von eingeführter Druckluft oder eines Schmiermittels, wird dies von den Drucksensoren 114 erfasst.

## Patentansprüche

1. Bruchtrennvorrichtung zum Bruchtrennen eines Motorbauteils (180), insbesondere eines Pleuels (181), mit einer Spreizelementanordnung (48) mit mindestens einem Spreizelement (41, 42) und einem durch einen Spreizantrieb (50) antreibbaren Betätigungskörper (43) zum Betätigen des mindestens einen Spreizelements (41, 42) in eine Spreizstellung zum Abtrennen einer ersten Komponente des Motorbauteils (180), insbesondere eines Pleueldeckels (186), von einer zweiten Komponente des Motorbauteils (180), insbesondere einem Pleuelfuß (185), wobei sie mindestens eine Spreizelement-Halterung (61, 62) aufweist, an der das mindestens eine Spreizelement (41, 42) anhand einer Verbindungseinrichtung (80) der Bruchtrennvorrichtung (40) lösbar befestigbar ist, **dadurch gekennzeichnet, dass** die Verbindungseinrichtung (80) eine Spanneinrichtung (81, 82) zum schraubenlosen Verspannen des mindestens einen Spreizelements (41, 42) mit der mindestens einen Spreizelement-Halterung (61, 62) aufweist, wobei die Spanneinrichtung (81, 82) mindestens einen Spannkörper (68) zur Zusammenwirkung mit einem Widerlagerabschnitt (85) eines mit dem Spreizelement (41, 42) verbundenen oder von dem Spreizelement (41, 42) gebildeten Widerlagerkörpers (75, 76) aufweist und der Spannkörper (68) zwischen einer Spannstellung (S), in welcher er das mindestens eine Spreizelement (41, 42) mit der mindestens einen Spreizelement-Halterung (61, 62) verspannt, und einer Lösestellung (L) verstellbar ist, in welcher das mindestens eine Spreizelement (41, 42) von der mindestens einen Spreizelement-Halterung (61, 62) entfernbar ist.

2. Bruchtrennvorrichtung (40) nach Anspruch 1, **dadurch gekennzeichnet, dass** die Spanneinrichtung (81, 82) eine Keilflächenanordnung zum Verspannen des mindestens einen Spreizelements (41, 42) an der mindestens einen Spreizelement-Halterung (61, 62) aufweist, wobei die Keilflächenanordnung mindestens eine Keilfläche (86, 87) zwischen dem Spannkörper (68) der Spanneinrichtung (81, 82) und dem Widerlagerkörper (75, 76) des mindestens einen Spreizelements (41, 42) aufweist.

3. Bruchtrennvorrichtung nach Anspruch 1 oder 2, **dadurch gekennzeichnet, dass** ein Spannantrieb (96) einen Spann-Antriebsmotor (93), insbesondere einen Linearantrieb, zum Verstellen des Spannkörpers (68) zwischen der Spannstellung (S) und der Lösestellung (L) aufweist.

4. Bruchtrennvorrichtung nach Anspruch 3, **dadurch gekennzeichnet, dass** an einander entgegengesetzten Seiten (90, 91) der mindestens einen Spreizelement-Halterung (61, 62) jeweils eine Antriebshalterung zur Befestigung des Spann-Antriebsmotors (93) des Spannantriebs (96) vorgesehen ist, so dass der Spann-Antriebsmotor (93) wahlweise an einer der beiden Seiten (90, 91) anordenbar ist.

5. Bruchtrennvorrichtung nach Anspruch 4, **dadurch gekennzeichnet, dass** die mindestens eine Spreizelement-Halterung (61, 62) eine Führungsaufnahme (67) für den Spannkörper (68) aufweist, wobei die Führungsaufnahme (67) zweckmäßigerweise an zwei entgegengesetzten Seiten (90, 91) der Spreizelement-Halterung (61, 62) offen ist, so dass der Spannkörper (68) wahlweise von einer der beiden Seiten (90, 91) her in die Führungsaufnahme (67) einführbar ist.

6. Bruchtrennvorrichtung nach Anspruch 5, **dadurch gekennzeichnet, dass** die Führungsaufnahme (67) zur Aufnahme des Widerlagerabschnitts (85) des Widerlagerkörpers (75, 76) ausgestaltet ist und/oder eine Längsachse (69) hat, die quer zur Spannachse oder Spannrichtung (97) des Spreizelements (41, 42) bezüglich der Spreizelement-Halterung (61, 62) verläuft.

7. Bruchtrennvorrichtung nach einem der vorhergehenden Ansprüche, **dadurch gekennzeichnet, dass** der Spannkörper (68) gabelartig angeordnete Spannarme (88) aufweist, zwischen denen der Widerlagerkörper (75, 76) des mindestens einen Spreizelements (41, 42) in der Spannstellung (S) angeordnet ist, wobei in der Spannstellung (S) jeder Spannarm (88) in Eingriff mit einem Widerlagerabschnitt (85) des Widerlagerkörpers (75, 76) ist, wobei zweckmäßigerweise vorgesehen ist, dass zwischen einem jeweiligen Spannarm (88) und dem zugeordneten Widerlagerabschnitt (85) mindestens eine Keilfläche (86, 87) der Keilflächenanordnung vorgesehen ist.

8. Bruchtrennvorrichtung nach einem der vorhergehenden Ansprüche, **dadurch gekennzeichnet, dass** an der mindestens einen Spreizelement-Halterung (61, 62) eine Befestigungseinrichtung (59) zur insbesondere lösbaren Befestigung einer Abstützeinrichtung (14-17) für das Motorbauteil (180) angeordnet ist, so dass ein das Motorbauteil (180) abstützendes Element, insbesondere ein Stützkopf (18-21), und das an der Spreizelement-Halterung (61, 62) angeordnete Spreizelement (41, 42) sich beim Bruchtrennen simultan bewegen.

9. Bruchtrennvorrichtung nach einem der vorhergehenden Ansprüche, **dadurch gekennzeichnet, dass** zwischen der mindestens einen Spreizelement-Halterung (61, 62) und dem mindestens einen Spreizelement (41, 42) und/oder zwischen dem mindestens einen Spreizelement (41, 42) und dem Widerlagerkörper (75, 76) mindestens eine Linearführung (70, 79) zur lösbaren Befestigung und Führung der jeweiligen Komponenten aneinander entlang einer Längsachse (69) vorgesehen ist, wobei die Komponenten durch eine Bewegung entlang der Längsachse (69) in Eingriff oder außer Eingriff miteinander bringbar sind.

10. Bruchtrennvorrichtung nach Anspruch 9, **dadurch gekennzeichnet, dass** die Längsachse (69) der mindestens einen Linearführung (70, 79) quer zu einer Spannrichtung (97) oder Spannachse der Spanneinrichtung (81, 82) verläuft und/oder dass die mindestens eine Linearführung (70, 79) an zwei Endbereichen offen ist derart, dass die jeweiligen Komponenten, insbesondere das mindestens eine Spreizelement (41, 42) oder der Widerlagerkörper (75, 76), von entgegengesetzten Seiten (90, 91) her in die Linearführung (70, 79) einführbar ist.

11. Bruchtrennvorrichtung nach einem der Ansprüche 9 oder 10, **dadurch gekennzeichnet, dass** die mindestens eine Linearführung (70, 79) eine insbesondere im Querschnitt T-förmige oder L-förmige Aufnahmenut und einen insbesondere im Querschnitt T-förmigen oder L-förmigen Führungsvorsprung zum Eingriff in die Aufnahmenut umfasst.

12. Bruchtrennvorrichtung nach einem der Ansprüche 9 bis 11, **dadurch gekennzeichnet, dass** der Widerlagerkörper (75, 76) eine Führungskomponente der mindestens einen Linearführung (70, 79) bildet, mit der das Spreizelement (41, 42) an der mindestens einen Spreizelement-Halterung (61, 62) durch eine Linearbewegung entlang der Längsachse (69) befestigbar oder durch eine lineare Bewegung entlang der Längsachse (69) von der mindestens einen Spreizelement-Halterung (61, 62) lösbar ist.

13. Bruchtrennvorrichtung nach einem der vorhergehenden Ansprüche, **dadurch gekennzeichnet, dass** der Widerlagerkörper (75, 76) lösbar mit dem mindestens einen Spreizelement (41, 42) verbindbar ist und/oder der Widerlagerkörper (75, 76) einen Spannanker bildet.

14. Bruchtrennvorrichtung nach einem der vorhergehenden Ansprüche, **dadurch gekennzeichnet, dass** sie eine Schmiereinrichtung zum Schmieren der Keilflächenanordnung und/oder einer Führungsflächenanordnung zwischen dem mindestens einen ersten Spreizelement (41, 42) und dem Betätigungskörper (43) aufweist und/oder dass sie eine Sensoranordnung (115) zur sensorischen Erfassung einer Anlage des mindestens einen Spreizelements (41, 42) an der mindestens einen Spreizelement-Halterung (61, 62) aufweist, wobei die Sensoranordnung zweckmäßigerweise zu einer Staudruckmessung ausgestaltet ist.

15. Bruchtrennvorrichtung nach einem der vorhergehenden Ansprüche, **dadurch gekennzeichnet, dass** die Spreizelementanordnung (48) (41, 42) zur Anordnung in einer Lageröffnung des Motorbauteils (180), insbesondere in einem Auge eines Pleuels (181), ausgestaltet ist, und/oder dass sie einen Bestandteil einer Werkzeugmaschine (10) und/oder eines Bearbeitungszentrums bildet.

## Claims

1. Fracture-splitting apparatus for the fracture-splitting of an engine component (180), in particular a connecting rod (181), with a spreader element assembly (48) with at least one spreader element (41, 42) and an actuating body (43), drivable by means of a spreader drive (50),for actuating the spreader element or elements (41, 42) into a spreading position to separate a first component of the engine component (180), in particular a connecting rod cover (186), from a second component of the engine component (180), in particular a connecting rod big end (185), wherein it has at least one spreader element holder (61, 62) to which the spreader element or elements (41, 42) may be releasably fixed with the aid of a connecting device (80) of the fracture-splitting apparatus (40), **characterised in that** the connecting device (80) has a clamping device (81, 82) for clamping without screws of the spreader element or elements (41, 42) to the spreader element holder or holders (61, 62), wherein the clamping device (81, 82) has at least one clamping body (68) for interaction with a thrust bearing section (85) of a thrust bearing body (75, 76) connected to the spreader element (41, 42) or formed by the spreader element (41, 42), and the clamping body (68) is adjustable between a clamping position (S) in which it clamps the spreader element or elements (41, 42) to the spreader element holder or holders (61, 62), and a release position (L) in which the spreader element or elements (41, 42) may be removed from the spreader element holder or holders (61, 62).

2. Fracture-splitting apparatus (40) according to claim 1, **characterised in that** the clamping device (81, 82) has a wedge surface assembly for clamping the spreader element or elements (41, 42) to the spreader element holder or holders (61, 62), wherein the wedge surface assembly has at least one wedge surface (86, 87) between the clamping body (68) of the clamping device (81, 82) and the thrust bearing body (75, 76) of the spreader element or elements (41, 42).

3. Fracture-splitting apparatus according to claim 1 or 2, **characterised in that** a clamping drive (96) of a clamping drive motor (93), in particular a linear drive, is provided for moving the clamping body (68) between the clamping position (S) and the release position (L).

4. Fracture-splitting apparatus according to claim 3, **characterised in that** a drive mounting for attaching the clamping drive motor (93) of the clamping drive (96) is provided in each case on opposite sides (90, 91) of the spreader element holder or holders (61, 62), so that the clamping drive motor (93) may be fitted as required on either of the two sides (90, 91).

5. Fracture-splitting apparatus according to claim 4, **characterised in that** the spreader element holder or holders (61, 62) has or have a guide seating (67) for the clamping body (68), wherein the guide seating (67) is expediently open at two opposite sides (90, 91) of the spreader element holder (61, 62), so that the clamping body (68) may be inserted into the guide seating (67) from one or other of the two sides (90, 91).

6. Fracture-splitting apparatus according to claim 5, **characterised in that** the guide seating (67) is designed to accommodate the thrust bearing section (85) of the thrust bearing body (75, 76) and/or has a longitudinal axis (69) running transversely to the clamping axis or clamping direction (97) of the spreader element (41, 42) relative the spreader element holder (61,62).

7. Fracture-splitting apparatus according to any of the preceding claims, **characterised in that** the clamping body (68) has clamping arms (88) arranged in the manner of a fork, between which the thrust bearing body (75, 76) of the spreader element or elements (41, 42) is located in the clamping position (S), wherein in the clamping position (S) each clamping arm (88) engages with a thrust bearing section (85) of the thrust bearing body (75, 76), wherein it is expediently provided that at least one wedge surface (86, 87) of the wedge surface assembly is provided between each clamping arm (88) and the assigned thrust bearing section (85).

8. Fracture-splitting apparatus according to any of the preceding claims, **characterised in that** there is provided on the spreader element holder or holders (61, 62) a mounting device (59) for fastening, in particular releasably, of a support fixture (14-17) for the engine component (180), so that an element supporting the engine component (180), in particular a support head (18-21), and the spreader element (41, 42) fitted to the spreader element holder (61, 62) may move simultaneously during fracture-splitting.

9. Fracture-splitting apparatus according to any of the preceding claims, **characterised in that** at least one linear guide (70, 79) is provided between the spreader element holder or holders (61, 62) and the spreader element or elements (41, 42) and/or between the spreader element or elements (41, 42) and the thrust bearing body (75, 76) for releasable fastening and guidance of the respective components on one another along a longitudinal axis (69), wherein the components may be brought into or out of engagement with one another by movement along the longitudinal axis (69).

10. Fracture-splitting apparatus according to claim 9, **characterised in that** the longitudinal axis (69) of the linear guide or guides (70, 79) runs transversely to a clamping direction (97) or clamping axis of the clamping device (81, 82), and/or that the linear guide or guides (70, 79) is or are open at two end sections in such a way that the respective components, in particular the spreader element or elements (41, 42) or the thrust bearing body (75, 76) may be inserted into the linear guide (70, 79) from opposite sides (90, 91).

11. Fracture-splitting apparatus according to one of claims 9 or 10, **characterised in that** the linear guide or guides (70, 79) includes or include a holding slot, in particular T-shaped or L-shaped in cross-section, and a guide projection, in particular T-shaped or L-shaped in cross-section, for engagement in the holding slot.

12. Fracture-splitting apparatus according to any of claims 9 to 11, **characterised in that** the thrust bearing body (75, 76) forms a guide component of the linear guide or guides (70, 79), by which the spreader element (41, 42) may be attached to the spreader element holder or holders (61, 62) by a linear movement along the longitudinal axis (69), or may be released from the spreader element holder or holders (61, 62) by a linear movement along the longitudinal axis (69).

13. Fracture-splitting apparatus according to any of the preceding claims, **characterised in that** the thrust bearing body (75, 76) may be connected releasably to the spreader element or elements(41, 42), and/or that the thrust bearing body (75, 76) forms a clamping anchor.

14. Fracture-splitting apparatus according to any of the preceding claims, **characterised in that** it has a lubricator for lubricating the wedge surface assembly and/or a guide surface arrangement between the first spreader element or elements (41, 42) and the actuating body (43), and/or that it has a sensor array (115) for pickup by sensor of contact of the spreader element or elements (41, 42) with the spreader element holder or holders (61, 62), wherein the sensor array is expediently designed for dynamic pressure measurement.

15. Fracture-splitting apparatus according to any of the preceding claims, **characterised in that** the spreader element assembly (48) (41, 42) is designed for locating in a bearing opening of the engine component (180), in particular in an eye of a connecting rod (181) and/or that it forms part of a machine tool (10) and/or a machining centre.

## Revendications

1. Dispositif de séparation par rupture servant à séparer par rupture un composant de moteur (180), en particulier une bielle (181), avec un ensemble d'éléments écarteurs (48) avec au moins un élément écarteur (41, 42) et un corps d'actionnement (43) pouvant être entraîné par un entraînement d'écartement (50), servant à actionner l'au moins un élément écarteur (41, 42) dans une position d'écartement afin de séparer une première composante du composant de moteur (180), en particulier un chapeau de bielle (186), d'une deuxième composante du composant de moteur (180), en particulier d'une tête de bielle (185), dans lequel il présente au moins un support d'élément écarteur (61, 62), au niveau duquel l'au moins un élément écarteur (41, 42) peut être fixé de manière amovible à l'aide d'un système d'assemblage (80) du dispositif de séparation par rupture (40), **caractérisé en ce que** le système d'assemblage (80) présente un système de serrage (81, 82) servant à assembler par serrage sans vissage l'au moins un élément écarteur (41, 42) à l'au moins un support d'élément écarteur (61, 62), dans lequel le système de serrage (81, 82) présente au moins un corps de serrage (68) destiné à coopérer avec un segment de butée (85) d'un corps de butée (75, 76) relié à l'élément écarteur (41, 42) ou formé par l'élément écarteur (41, 42) et le corps de serrage (68) peut être déplacé entre une position de serrage (S), dans laquelle il assemble par serrage l'au moins un élément écarteur (41, 42) à l'au moins un support d'élément écarteur (61, 62), et une position de desserrage (L), dans laquelle l'au moins un élément écarteur (41, 42) peut être retiré de l'au moins un support d'élément écarteur (61, 62).

2. Dispositif de séparation par rupture (40) selon la revendication 1, **caractérisé en ce que** le système de serrage (81, 82) présente un ensemble de surfaces de calage servant à assembler par serrage l'au moins un élément écarteur (41, 42) au niveau de l'au moins un support d'élément écarteur (61, 62), dans lequel l'ensemble de surfaces de calage présente au moins une surface de calage (86, 87) entre le corps de serrage (68) du système de serrage (81, 82) et le corps de butée (75, 76) de l'au moins un élément écarteur (41, 42).

3. Dispositif de serrage par rupture selon la revendication 1 ou 2, **caractérisé en ce qu'**un entraînement de serrage (96) présente un moteur d'entraînement de serrage (93), en particulier un entraînement linéaire, servant à déplacer le corps de serrage (68) entre la position de serrage (S) et la position de desserrage (L).

4. Dispositif de serrage par rupture selon la revendication 3, **caractérisé en ce que** respectivement un support d'entraînement servant à fixer le moteur d'entraînement de serrage (93) de l'entraînement de serrage (96) est prévu au niveau de côtés (90, 91) opposés les uns aux autres de l'au moins un support d'élément d'écartement (61, 62) de sorte que le moteur d'entraînement de serrage (93) puisse être disposé au choix au niveau de l'un des deux côtés (90, 91).

5. Dispositif de séparation par rupture selon la revendication 4, **caractérisé en ce que** l'au moins un support d'élément écarteur (61, 62) présente un logement de guidage (67) pour le corps de serrage (68), dans lequel le logement de guidage (67) est ouvert de manière opportune au niveau de deux côtés (90, 91) opposés du support d'élément écarteur (61, 62) de sorte que le corps de serrage (68) puisse être introduit au choix depuis l'un des deux côtés (90, 91) dans le logement de guidage (67).

6. Dispositif de séparation par rupture selon la revendication 5, **caractérisé en ce que** le logement de guidage (67) est configuré afin de recevoir le segment de butée (85) du corps de butée (75, 76) et/ou a un axe longitudinal (69), qui s'étend de manière transversale par rapport à l'axe de serrage ou à la direction de serrage (97) de l'élément écarteur (41, 42) par rapport au support d'élément écarteur (61, 62).

7. Dispositif de séparation par rupture selon l'une quelconque des revendications précédentes, **caractérisé en ce que** le corps de serrage (68) présente des bras de serrage (88) disposés à la manière de fourche, entre lesquels le corps de butée (75, 76) de l'au moins un élément écarteur (41, 42) est disposé dans la position de serrage (S), dans lequel chaque bras de serrage (88) est, dans la position de serrage (S), en prise avec un segment de butée (85) du corps de butée (75, 76), dans lequel de manière opportune il est prévu qu'au moins une surface de calage (86, 87) de l'ensemble de surfaces de calage est prévue entre un bras de serrage (88) respectif et le segment de butée (85) associé.

8. Dispositif de séparation par rupture selon l'une quelconque des revendications précédentes, **caractérisé en ce qu'**un système de fixation (59) servant à fixer en particulier de manière amovible un système de soutien (14 - 17) pour le composant de moteur (180) est disposé au niveau de l'au moins un support d'élément écarteur (61, 62) de sorte qu'un élément soutenant le composant de moteur (180), en particulier une tête de support (18 - 21), et l'élément écarteur (41, 42) disposé au niveau du support d'élément écarteur (61, 62) se déplacent simultanément lors de la séparation par rupture.

9. Dispositif de séparation par rupture selon l'une quelconque des revendications précédentes, **caractérisé en ce qu'**au moins un guidage linéaire (70, 79) servant à fixer de manière amovible et à guider les composantes respectives les unes contre les autres le long d'un axe longitudinal (69) est prévu entre l'au moins un support d'élément écarteur (61, 62) et l'au moins un élément écarteur (41, 42) et/ou entre l'au moins un élément écarteur (41, 42) et le corps de butée (75, 76), dans lequel les composantes peuvent être amenées en prise les unes avec les autres ou peuvent être amenées hors prise les unes des autres par un déplacement le long de l'axe longitudinal (69).

10. Dispositif de séparation par rupture selon la revendication 9, **caractérisé en ce que** l'axe longitudinal (69) de l'au moins un guidage linéaire (70, 79) s'étend de manière transversale par rapport à une direction de serrage (97) ou un axe de serrage du système de serrage (81, 82), et/ou **en ce que** l'au moins un guidage linéaire (70, 79) est ouvert au niveau de deux zones d'extrémité de telle manière que les composantes respectives, en particulier l'au moins un élément écarteur (41, 42) ou le corps de butée (75, 76) peut être introduit depuis des côtés (90, 91) opposés dans le guidage linéaire (70, 79).

11. Dispositif de séparation par rupture selon l'une quelconque des revendications 9 ou 10, **caractérisé en ce que** l'au moins un guidage linéaire (70, 79) comprend une rainure de logement présentant en particulier dans la section transversale une forme de T ou une forme de L et une partie faisant saillie de guidage présentant en particulier dans la section transversale une forme de T ou une forme de L destinée à venir en prise avec la rainure de logement.

12. Dispositif de séparation par rupture selon l'une quelconque des revendications 9 à 11, **caractérisé en ce que** le corps de butée (75, 76) forme une composante de guidage de l'au moins un guidage linéaire (70, 79), avec laquelle l'élément écarteur (41, 42) peut être fixé au niveau de l'au moins un support d'élément écarteur (61, 62) par un déplacement linéaire le long de l'axe longitudinal (69) ou peut être détaché de l'au moins un support d'élément écarteur (61, 62) par un déplacement linéaire le long de l'axe longitudinal (69).

13. Dispositif de séparation par rupture selon l'une quelconque des revendications précédentes, **caractérisé en ce que** le corps de butée (75, 76) est relié de manière amovible à l'au moins un élément écarteur (41, 42), et/ou en ce que le corps de butée (75, 76) forme un système d'ancrage par serrage.

14. Dispositif de séparation par rupture selon l'une quelconque des revendications précédentes, **caractérisé en ce qu'**il présente un système de lubrification servant à lubrifier l'ensemble de surfaces de calage et/ou un ensemble de surfaces de guidage entre l'au moins un premier élément écarteur (41, 42) et le corps d'actionnement (43), et/ou **en ce qu'**il présente un ensemble de capteurs (115) servant à détecter par des capteurs un appui de l'au moins un élément écarteur (41, 42) au niveau de l'au moins un support d'élément écarteur (61, 62), dans lequel l'ensemble de capteurs est configuré de manière opportune aux fins d'une mesure de la pression dynamique.

15. Dispositif de séparation par rupture selon l'une quelconque des revendications précédentes, **caractérisé en ce que** l'ensemble d'éléments écarteurs (48) (41, 42) est configuré pour être disposé dans une ouverture de montage du composant de moteur (180), en particulier dans un oeillet d'une bielle (181), et/ou **en ce qu'**il forme un élément constitutif d'une machine-outil (10) et/ou d'un centre d'usinage.
